# EUROPÄISCHE PATENTSCHRIFT

(11) **EP 0 704 237 B1**
(45) Veröffentlichungstag und Bekanntmachung des Hinweises auf die Patenterteilung: **30.09.1998**
(21) Anmeldenummer: 95110969.3
(22) Anmeldetag: 13.07.1995
(51) Int. Cl.: B01F 3/04, C02F 3/20

(54) **Begasungsvorrichtung**
Device for introducing gas
Dispositif pour l'introduction de gaz

(30) Priorität: 29.09.1994 DE 9415593 U; 30.09.1994 DE 9415775 U
(43) Veröffentlichungstag der Anmeldung: 03.04.1996
(73) Patentinhaber: SCHÜSSLER, Karl-Heinz, D-61348 Bad Homburg v. d. Höhe (DE)
(72) Erfinder: SCHÜSSLER, Karl-Heinz, D-61348 Bad Homburg v. d. Höhe (DE)
(74) Vertreter: KEIL & SCHAAFHAUSEN Patentanwälte

(56) Entgegenhaltungen:
- EP-A- 0 174 429
- WO-A-92/19546
- DE-A- 3 410 267
- DE-U- 9 013 213
- DE-U- 9 318 675

## Beschreibung

Die Erfindung bezieht sich auf eine Vorrichtung zum Begasen von Flüssigkeiten, insbesondere Belüften von Abwasser oder dgl. flüssigen Medien in Begasungsbecken, mit einer eine im wesentlichen horizontal, d.h. parallel zum Medienspiegel auszurichtende Trägerfläche aufweisenden Trägerkonstruktion für eine flächige Membran, welche an ihrem Außenumfangsrand an der Trägerfläche dicht festgelegt ist, sich ohne Gasbeaufschlagung auf der Trägerfläche abstützt und sich von dieser bei Gasbeaufschlagung von unten, ggf. unter Öffnen der sich in ihr befindenden Perforartion, im Bereich innerhalb des Außenrandes abhebt, um den Gasaustritt in das flüssige Medium zu gestatten, sowie mit einer wenigstens einen Gaszufuhrkanal bildenden Gaszufuhreinrichtung von einer Druckquelle, z.B. einer Gaszuführungsleitung, über eine Gasaustrittsöffnung in den Gasraum zwischen der Trägerfläche und der Membran darüber.

Aus der DE-A-33 16 140 ist ein Flächenbelüfter zum feinblasigen Begasen von Flüssigkeiten bekannt, welcher aus einem Basiskörper und einer Belüftungsplatte besteht, welche sich in Abhängigkeit von einem zwischen diesem herrschenden Druck dichtend aufeinanderlegen oder zueinander im Abstand befinden. Dabei ist die der Belüftungsplatte zugewandte Dichtfläche des Basiskörpers vorzugsweise konvex ausgebildet. Derartige Belüftungsvorrichtungen haben den Nachteil, daß sich der aufsteigende Blasenstrom oberhalb des Flächenbelüfters einschnürt und daher einen unerwünscht geringen Wirkungsgrad hat. Ähnlich ist es auch bei dem aus der DE-A-34 10 267 bekannten Begasungsgerät, bei welchem die Membran mittig mit einer Hubbegrenzung ausgestattet ist, oder bei einer Belüftungsvorrichtung nach EP-A-0 174 429, bei welcher die Membran mit der Tragfläche im Bereich der zentralen Luftzuführung von unten fest verbunden ist. Aus der DE-A-40 12 631 ist eine Vorrichtung zum Begasen von Flüssigkeiten bekannt, bei welcher die Membran als stützungsfreie, lediglich über wenigstens einen Gaszufuhrstutzen gehaltene, bis auf wenigstens eine Gaszufuhröffnung und die Perforation geschlossene als horizontal liegender Schlauch gestaltete Blase ausgebildet ist. Bei diesem Ringschlauchbegaser wird zwar aufgrund einer sich mittig entwickelnden Strömung des flüssigen Mediums der Blasenstromeinschnürung entgegengewirkt. Nachteiligist jedoch der verhältismäßig große Herstellungsaufwand und die fehlende Stabilität des Ringschlauchs.

Aufgabe der vorliegenden Erfindung ist es, eine Begasungsvorrichtung der eingangs genannten Art bei einfacher Konstruktion und zuverlässiger Funktion mit einem besseren Begasungswirkungsgrad auszustatten.

Diese Aufgabe wird erfindungsgemäß im wesentlichen bspw. dadurch gelöst, daß sowohl die Trägerfläche als auch die Membran unter Freihaltung eines mittigen Strömungsquerschnitts jeweils ringflächenförmig ausgebildet sind und daß die Membran an ihrem den Strömungsquerschnitt begrenzenden Innenumfangsrand an der Trägerfläche dicht befestigt ist. Auf diese Weise kann bei leichter Herstellbarkeit sowie zuverlässiger Abstützbarkeit der Membran aufgrund des mittigen Strömungsquerschnitts die gewünschte Strömung entwickelt werden, welche ein Einschnüren des Blasenstroms und damit eine reduzierte Wirksamkeit der Begasung entgegenwirkt. Aufgrund der ringflächenförmigen Ausgestaltung der Membran wird ferner verhindert, daß diese sich bei Gasbeaufschlagung zu weit aufwölbt und dadurch einen über die Fläche ungleichmäßigen Gasaustritt zuläßt.

Eine weitere Vergleichmäßigung des Gasaustritts aus der Begasungsvorrichtung kann dadurch erzielt werden, daß die Gasaustrittsöffnung des Gaszufuhrkanals in Form eines radialen Schlitzes in der Trägerfläche aufweist.

Um einerseits zu verhindern, daß bei der Mündung des Gaszufuhrkanals in den Gasraum unter der Membran übermäßig viel Gas aus der Membran austritt und um andererseits bei fehlender Gasbeaufschlagung eine zuverlässige Abdichtung der Gasaustrittsöffnung zu erzielen, kann die Membran im Bereich der Gasaustrittsöffnung der Trägerfläche perforationsfrei sein.

Um diese beiden Wirkungen noch zu unterstützen, kann ferner vorgesehen sein, daß die Membran im Bereich der Gasaustrittsöffnung der Trägerfläche gegenüber der übrigen Materialstärke verdickt ist.

Wenn der Innenumfangsrand der Membran bzw. der Trägerfläche geringfügig höher liegt als der Außenumfangsrand, wird verhindert, daß sich unter dem erfindungsgemäßen Ringflächenbelüfter Gas ansammelt, welches zu einem unerwünschten Auftrieb führen könnte.

Zu diesem Zweck ist die Trägerfläche insbesondere von außen nach innen allmählich, vorzugsweise konisch ansteigend ausgebildet.

Von Vorteil ist es ferner, wenn die Membran unter Vorspannung auf die Trägerfläche aufgespannt ist. Auf diese Weise kommt sie aufgrund ihrer Eigenspannung dichtend zur Anlage mit der Trägerfläche, wenn keine oder nur eine zu geringe Gasbeaufschlagung der Membran vorhanden ist. Ein Eindringen des flüssigen Mediums oder von in diesem enthaltenden Schmutz in die Perforation der Membran bzw. gar in die Gaszuführungseinrichtung der Trägervorrichtung ist dadurch sicher verhindert.

Zum einfachen Aufspannen der Membran auf der Trägerfläche und zum einfachen Demontieren ist es von Vorteil, wenn die Trägerfläche und die Membran an ihrem Außenumfangsrand und/oder ihrem Innenumfangsrand einen Nut-Feder-Eingriff bilden. Auf diese Weise wird gleichzeitig eine zuverlässige Abdichtung in den entsprechenden Randbereichen erreicht.

Dem gleichen Zweck dient es, wenn gemäß einer weiteren vorteilhaften Ausgestaltung der Erfindung sich die Membran an ihrem Außenumfangsrand und/oder ihrem Innenumfangsrand mit einem Umfangswulst an einem Umfangsflansch der Trägerfläche abstützt.

Eine zusätzliche Sicherung der Membran an der Trägerfläche kann dadurch erfolgen, daß die Membran an ihrem Außenumfangsrand und/oder ihrem Innenumfangsrand mittels Spannring an der Trägerfläche radial festgelegt ist.

Ferner kann zur Sicherung der Membran an der Trägerfläche die Membran an ihrem Außenumfangsrand und/oder ihrem Innenumfangsrand mittels einer Deckplatte bzw. -ring an der Trägerfläche axial und/oder radial festgeklemmt sein.

Die Membran ist ferner in bezug auf die Gestaltung der Trägerfläche gemäß einem weiteren Erfindungsmerkmal so gestaltet und in ihrer materiellen Beschaffenheit ausgebildet, daß sie ohne bzw. bei zu geringer Gasbeaufschlagung von dem umgebenden flüssigen Medium dicht auf dieTrägerfläche gedrückt wird.

Einem Eindringen von flüssigem Medium oder Schmutz in die Begasungsvorrichtung kann ferner dadurch entgegengewirkt werden, daß die Perforation der Membran ohne Gasbeaufschlagung geschlossen ist und sich erst nach Gasbeaufschlagung und Dehnung der Membran öffnet.

Zur Vergleichmäßigung des Gasaustrittes aus der Membranoberfläche kann die Perforationsdichte der Membran von innen nach außen hin zunehmen.

Ebenso ist denkbar, daß zu diesem Zweck die Membran in ihrer Dicke von innen nach außen hin abnimmt.

Die Perforationen können mittels spitzer Nadeln bzw. spitzer konischer Messer von der Unterseite (Gasdruckseite) oder der Oberseite (Gasaustrittsseite) her in die Membran eingebracht sein, so daß die Perforationen konische Gestalt haben. Im ersten Fall wird einem Eindringen von Wasser oder Schmutz in die Perforation entgegengewirkt, im zweiten Fall wird eventull in die Perforation eingedrungener Schmutz bei Gasbeaufschlagung leicht aus der Perforation wieder ausgetrieben. Die Perforation wird bei größerer Vorspannung in die Membran eingebracht werden, als sie später mit Vorspannung auf der Trägerfläche aufgebracht wird.

Um den Gasblasenstrom wieder verändern zu können, kann dem Gaszufuhrkanal eine z.B. eine Justierschraube aufweisende Reguliereinrichtung für den Gasdurchtritt zugeordnet sein.

Zur Montage des erfindungsgemäßen Ringflächenlüfters ist es von Vorteil, wenn die Trägerkonstruktion mittels Gewinde an einem Gaszufuhrstutzen auf die Gaszufuhrleitung dicht aufschraubbar bzw. durch Klemmbügel, Schellenband oder Gewindestab festschraubbar ist.

Um den mittleren Strömungsquerschnitt des erfindungsemäßen Flächenbelüfters möglichst freizuhalten, kann bei einer weiteren besonderen Ausgestaltung der Erfindung der Gaszufuhrkanal außermittig zur Tragfläche und der Membran angeordnet sein und in eine ebenfalls außermittig angeordnete Gasaustrittsöffnung unter der Membran münden.

Normalerweise ist die Trägerfläche eine starre Unterkonstruktion und die Membran aus flexiblem Material. Erfindungsgemäß wird jedoch vorgeschlagen, auch die Trägerfläche aus flexiblem Material bestehen zu lassen, jedoch von höherer Shorehärte als die der Membran.

Insbesondere dann ist es von Vorteil, wenn die Membran erst auf die Trägerfläche aufgespannt und dann von der Gasaustrittsseite aus perforiert wird. Dann dient die Trägerfläche selbst als Perforationsunterlage und es werden einige Arbeitsgänge gespart.

Weitere Ziele, Merkmale, Vorteile und Anwendungsmöglichkeiten der Erfindung ergeben sich aus der nachfolgenden Beschreibung von Ausführungsbeispielen anhand der Zeichnung.

Es zeigen:
- Fig. 1: eine erste Ausführungsform der erfindungsgemäßen Begasungsvorrichtung in Draufsicht, teilweise weggebrochen,
- Fig. 1A: die Begasungsvorrichtung nach Fig. 1 im Schnitt A-A von Fig. 1,
- Fig. 2: einen Schnitt entsprechend Fig. 1A für eine andere Ausführungsform der Erfindung,
- Fig. 3: einen Schnitt entsprechend Fig. 1A (teilweise weggebrochen) für eine weitere Ausführungsform der Erfindung,
- Fig. 3B: einen Schnitt B-B der Begasungsvorrichtung von Fig. 3 teilweise weggebrochen,
- Fig. 4: eine Schnittdarstellung entsprechend Fig. 3 für eine weitere Ausführungsform der Erfindung,
- Fig. 4C: einen Schnitt C-C der Begasungsvorrichtung von Fig. 4 (teilweise weggebrochen),
- Fig. 5: einen Schnitt entsprechend Fig. 3 für eine weitere Ausführungsform der Erfindung,
- Fig. 5D: einen Schnitt D-D der Begasungsvorrichtung von Fig. 5 (teilweise weggebrochen),
- Fig. 6: eine Draufsicht gemäß Fig. 1 auf eine noch weitere Ausführungsform einer erfindungsgemäßen Begasungsvorrichtung (bis auf den mittleren Bereich weggebrochen),
- Fig. 6E: einen vervollständigten Schnitt E-E der Begasungsvorrichtung von Fig 6, und
- Fig. 7: eine Darstellung entsprechend Fig. 2 für eine noch andere Ausführungsform.

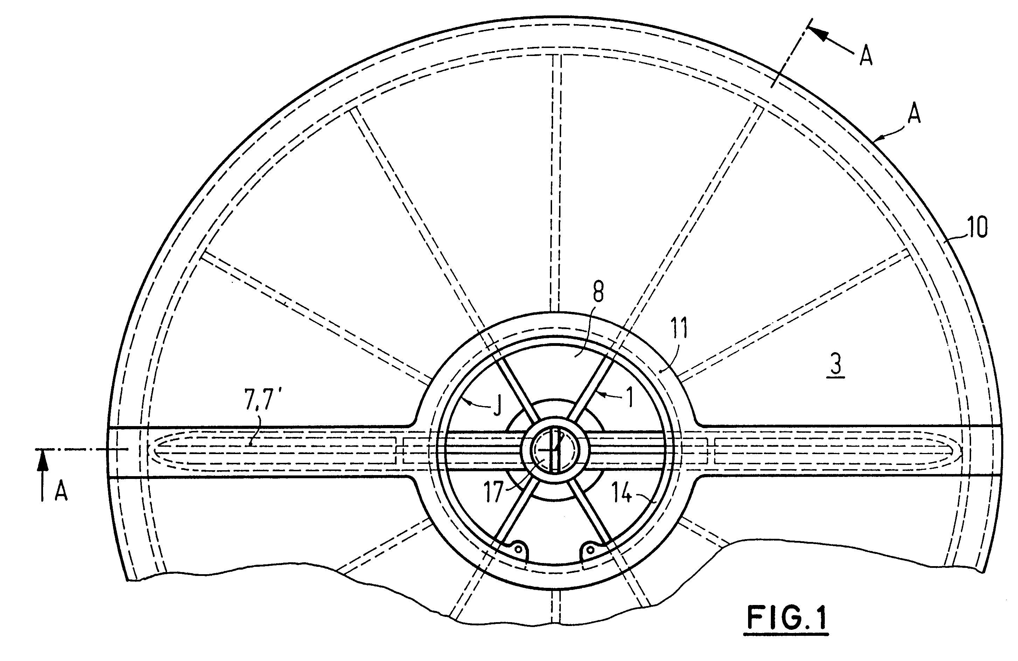

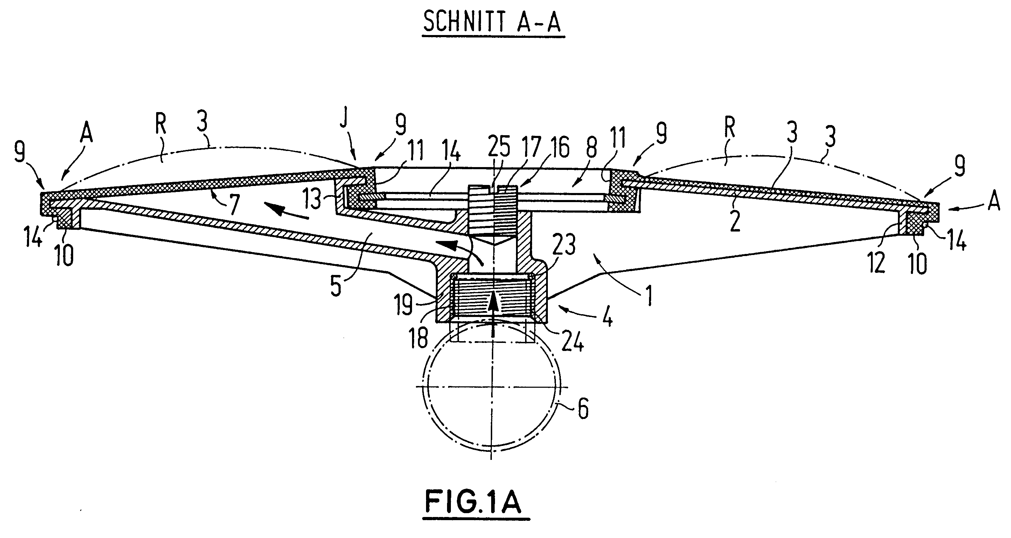

Die Begasungsvorrichtung nach den Fig. 1, 1A weist eine Trägerkonstruktion 1 auf, welche mit einer im wesentlichen horizontal, d.h. parallel zu dem Medienspiegel auszurichtende Trägerfläche 2 versehen ist. Die Trägerfläche 2 steigt bei dem dargestellten Ausführungsbeispiel von außen nach innen leicht konisch an und ist ringflächenförmig mit einer Mittelaussparung ausgebildet. Die Trägerfläche 2 dient bei fehlender Gasbeaufschlagung der Abstützung einer mit Perforation versehenen ringflächenförmigen Membran 3, deren Mittelaussparung konzentrisch zu der Mittelaussparung der Trägerfläche 2 liegt, so daß die Mittelaussparungen gemeinsam einen mittigen Strömungsquerschnitt 8 bilden. Die Membran 3 ist an ihrem Außenumfangsrand A an der Trägerfläche 2 dicht festgelegt. Zu diesem Zweck greift der äußere Rand der Trägerfläche 2 in eine Innennut des Außnumfangsrandes A der Membran 3, welche sich ihrerseits mit einem nach unten ragenden Umfangswulst 10 an einen von der Trägerfläche 2 nach unten wegragenden Umfangsflansch 12 anlegt. Auch an ihrem Innenumfangsrand I hat die Membran 3 einen Umfangswulst 11, in dessen Außennut der Innenumfangsrand I der Trägerfläche 2 eingreift. Der unter die Trägerfläche 2 ragende Abschnitt des Umfangswulstes 11 weist eine Innennut auf, in welche ein Spannring 14 eingreift, welcher den Umfangswulst 11 nach außen gegen die Tragfläche 2 mit einem jedenfalls bereichsweise vorgesehenen inneren Umfangsflansch 13 drückt. Mittels diesem sowohl am Außenumfangsrand A als auch am Innenumfangsrand I ausgebildete Nut-Feder-Eingriff 9 wird die Membran 3 unter Vorspannung auf der Trägerfläche 2 außen und innen dicht festgelegt.

Bei Gasbeaufschlagung kann sich jedoch die Membran 3 entsprechend der strichpunktierten Darstellung unter Bildung eins Gasraumes R zwischen dem Außenumfangsrand A und dem Innenumfangsrand I aufwölben. Die Perforation in der Membran 3 kann so ausgebildet sein, daß sie ohne oder bei nur geringer Gasbeaufschlagung geschlossen ist, während sie sich bei Aufwölbung und Dehnung der Membran 3 unter Gasbeaufschlagung öffnet, so daß ein Gasaustritt in das flüssige Medium oberhalb des Ringflächenbegasers erfolgen kann.

Die Trägerkonstruktion 1 ist mit einer Gaszuführungseinrichtung 4 ausgestattet, welche bei dem in Fig. 1A dargestellten Ausführungsbeispiel einen unteren Gaszufuhrstutzen 19 aufweist, welcher in einen schrägen Gaszufuhrkanal 5 übergeht, welcher seinerseits in eine Gasaustrittsöffnung 7 in Form eines radialen Schlitzes 7' unter der Membran 3 mündet. Wie aus Fig. 1 ersichtlich, zweigen von dem Gaszufuhrstutzen 19 zwei diametral einander gegenüberliegende Gaszufuhrkanäle 5 ab, welche in jeweiligen schlitzförmigen Gasaustrittsöffnungen 7, 7' der Trägerfläche 2 münden.

Bei dem Ausführungsbeispiel von Fig. 1, 1A weist der Gaszufuhrstutzen 19 ein Innengewinde 18 auf, mit Hilfe dessen die Begasungsvorrichtung auf einen mit Außengewinde ausgestatteten Nippel 24 einer Gaszufuhrleitung 6 unter Zwischenlage einer Dichtung 23 dicht aufschraubbar ist.

An dem Übergang des Gaszufuhrstutzens 19 in den Gaszufuhrkanal 5 befindet sich eine Regeleinrichtung 16 für den Gasdurchtritt zu der Membran 3, welche im wesentlichen aus einer mittigen, vertikal verstellbaren Justierschraube 17 besteht, welche mehr oder weniger weit in den Gasströmungsquerschnitt eingreift. Die Justierschraube 17 ist mit einem Eingriffsschlitz 25 für die Betätigung mittels Werkzeug von oben versehen.

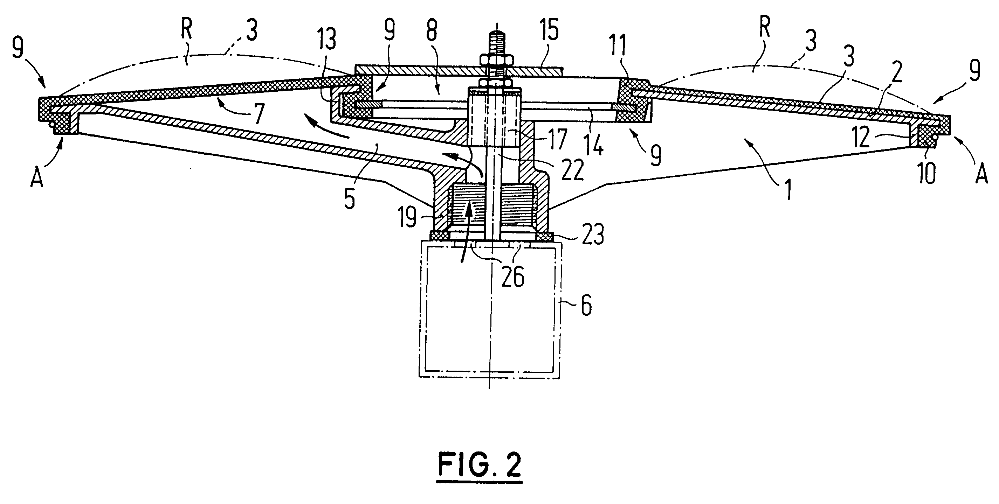

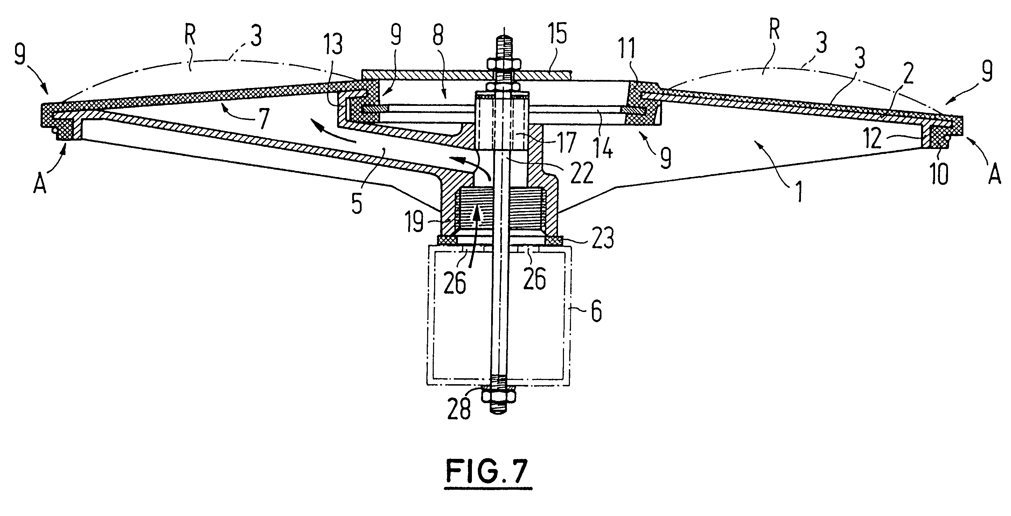

Das Ausführungsbeispiel von Fig. 2 unterscheidet sich von dem der Fig. 1, 1A im wesentlichen dadurch, daß die Membran 3 an ihrem Innenumfangsrand I zusätzlich von einer Deckplatte bzw. -ring 15 axial festgeklemmt wird, welche bzw. welcher die erforderlichen Durchbrechungen bzw. Freiräume aufweist, um den Strömungsquerschnitt 8 nicht unerwünscht zu verengen. Die Deckplatte 15 dient als Gegenlager eines Gewindestabes 22, welcher auf die Gaszufuhrleitung 6 im Bereich von Gasaustrittsöffungen 26 der Gaszufuhrleitung 6 angeschweißt bzw. entsprechend Fig. 7 vollständig durch die Gaszufuhrleitung 6 hindurchgesteckt und nach außen abgedichtet ist. Mit Hilfe des Gewindestabes 2 läßt sich die Begasungsvorrichtung unter Zwischenlage von Dichtungen 23, 28 mittels des Gaszufuhrstutzens 19 auf der Oberseite der Gaszufuhrleitung 6 sowie an der Unterseite der Gaszufuhrleitung 6 dicht festspannen und auch leicht wieder lösen.

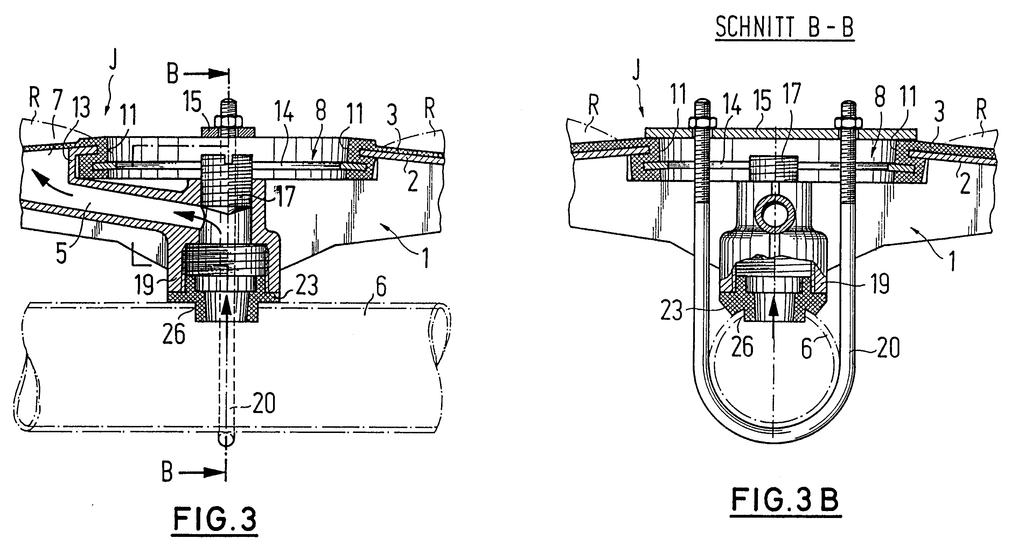

Bei dem Ausführungsbeispiel von Fig. 3, 3B ist die Begasungsvorrichtung auf ähnliche Weise mittels einer den Innenumfangsrand I der Membran 3 übergreifenden Deckplatte 15 und einem die Gaszufuhrleitung 6 umgreifenden Klemmbügel 20 mittels Verschraubung festgespannt. Zur Abdichtung des Gaszufuhrstutzens 19 gegen die Gasaustrittsöffnung 26 der Gaszufuhrleitung 6 ist eine zylindrische Dichtung 23 mit einem sich außen an die Gaszufuhrleitung 6 anlegenden Dichtflansch vorgesehen. Mit ihrem unteren zylindrischen Teil greift die Dichtung 23 in die Gasaustrittsöffnung 26 der Gaszufuhrleitung 6 ein. Der obere zylindrische Teil der Dichtung 23 ist an den lichten Querschnitt des Gaszufuhrstutzens 19 angepaßt.

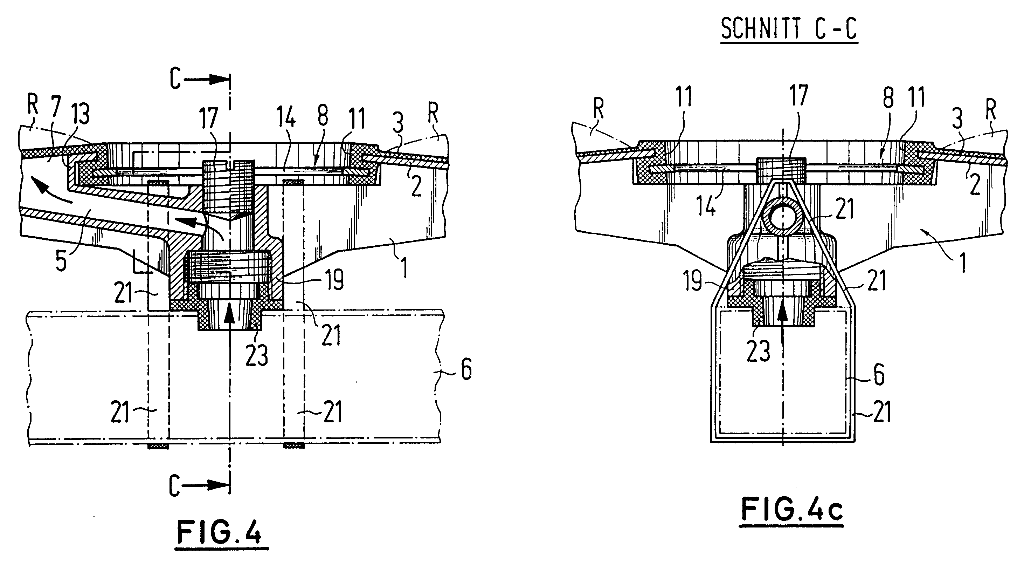

Bei dem Ausführungsbeispiel gemäß den Fig. 4, 4C erfolgt das Festspannen der Begasungsvorrichtung auf der Gaszufuhrleitung 6 mittels einer ähnlichen Dichtung 23, jedoch statt mittels Klemmbügel jetzt mit zwei Schellenbändern 21. Eine obere Deckplatte 15 ist hier nicht erforderlich.

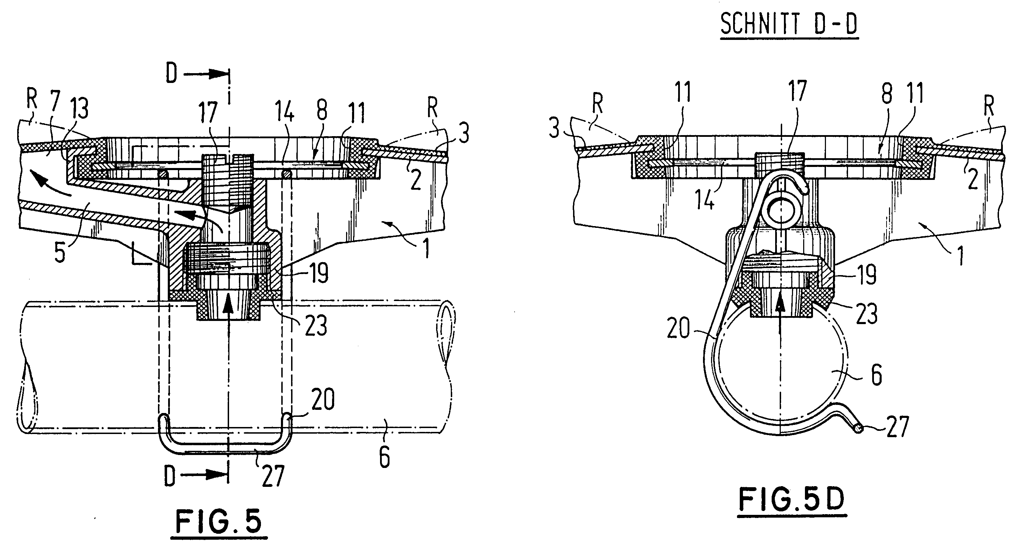

Bei dem Ausführungsbeispiel von Fig. 5, 5D ist ein Klemmbügel 20 aus federelastischem Material so an die Trägerkonstruktion 1 angehängt und am unteren Ende nur teilweise um die Gaszufuhrleitung 6 herumgeführt, daß der Klemmbügel 20 aufgrund seiner Eigenelastizität an der Gaszufuhrleitung 6 einschnappen, aufgrund eines Griffabschnitts 27 aber auch gegen die von ihm ausgeübte Federspannung wieder gelöst werden kann, ohne daß eine zusätzliche Verschraubung erforderlich ist. Auf diese Weise können Montage und Demonatage schneller ausgeführt werden. Der Strömungsquerschnitt 8 wird durch eine Deckplatte 15 nicht eingeschränkt.

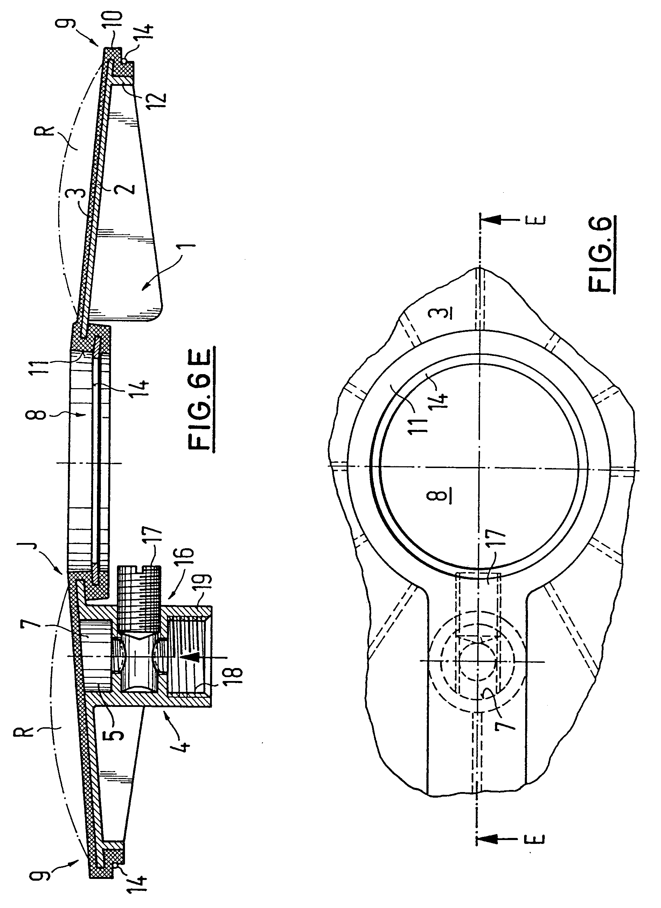

Bei dem Ausführungsbeispiel der Fig. 6, 6E befindet sich die Gaszuführeinrichtung 4 einschließlich der Regeleinrichtung 16 mit der in diesem Fall horizontal liegenden und die Form eines Küken aufweisenden Justierschraube 17 vollständig außermittig, so daß der Strömungsquerschnitt 8, welcher von dem Innenumfangsrand I der Membran 3 bzw. dem Spannring 14 begrenzt wird, vollständig freigehalten ist. Der achsparallele Gaszufuhrstutzen 19 mündet geradlinig über die Regeleinrichtung 16 in den ebenfalls achsparallelen Gaszufuhrkanal 5, welcher in die außermittige Gasaustrittsöffnung 7 unter der Membran 3 übergeht. Der Gaszufuhrstutzen 19 hat in diesem Fall wiederum ein Innengewinde 18, mit Hilfe dessen die Begasungsvorrichtung auf einen Gewindenippel der Gaszufuhrleitung 6 aufschraubbar ist.

### Bezugszeichenliste:

- 1: Trägerkonstruktion
- 2: Tragfläche
- 3: Membran
- 4: Gaszufuhreinrichtung
- 5: Gaszufuhrkanal
- 6: Gaszufuhrleitung
- 7, 7': Gasaustrittsöffnung, radialer Schlitz
- 8: Strömungsquerschnitt
- 9: Nut-Feder-Eingriff
- 10: Umfangswulst (außen)
- 11: Umfangswulst (innen)
- 12: Umfangsflansch (außen)
- 13: Umfangsflansch (innen)
- 14: Spannring (innerer oder äußerer)
- 15: Deckplatte bzw. -ring
- 16: Regeleinrichtung
- 17: Justierschraube
- 18: Gewinde
- 19: Gaszufuhrstutzen
- 20: Klemmbügel
- 21: Schellenband
- 22: Gewindestab
- 23: Dichtung
- 24: Nippel
- 25: Eingriffsschlitz
- 26: Gasaustrittsöffnung
- 27: Griffabschnitt
- 28: Dichtring
- A: Außenumfangsrand
- I: Innenumfangsrand
- R: Gasraum

## Patentansprüche

1. Vorrichtung zum Begasen von Flüssigkeiten, insbesondere Belüften von Abwasser oder dgl. flüssigen Medien in Begasungsbecken, mit einer eine im wesentlichen horizontal, d.h. parallel zum spiegel auszurichtende Trägerfläche (2) aufweisenden Trägerkonstruktion (1) für eine flächige Membran (3), welche an ihrem Außenumfangsrand (A) an der Trägerfläche (2) dicht festgelegt ist, sich ohne Gasbeaufschlagung auf der Trägerfläche (2) abstützt und sich von dieser bei Gasbeaufschlagung von unten, ggf. unter Öffnen der sich in ihr befindenden Perforation, im Bereich innerhalb des Außenumfangsrandes (A) abhebt, um den Gasaustritt in das flüssige Medium zu gestatten, sowie mit einer wenigstens einen Gaszufuhrkanal (5) bildenden Gaszufuhreinrichtung (4) von einer Druckquelle, z.B. einer Gaszuführungsleitung (6), über eine Gasaustrittsöffnung (7) in den Gasraum (R) zwischen der Trägerfläche (2) und der Membran (3) darüber, **dadurch gekennzeichnet**, daß sowohl die Trägerfläche (2) als auch die Membran (3) unter Freihaltung eines mittigen Strömungsquerschnitts (8) jeweils ringflächenförmig ausgebildet sind und daß die Membran (3) an ihrem den strömungsquerschnitt (8) begrenzenden Innenumfangsrand (I) an der Trägerfläche (2) dicht befestigt ist.

2. Vorrichtung nach Anspruch 1, **dadurch gekennzeichnet**, daß die Gasaustrittsöffnung (7) des Gaszufuhrkanals (5) die Form eines radialen Schlitzes (7') in der Trägerfläche (2) aufweist.

3. Vorrichtung nach Anspruch 1 oder 2, **dadurch gekennzeichnet**, daß die Membran (3) im Bereich der Gasaustrittsöffnung (7) der Trägerfläche (2) perforationsfrei ist.

4. Vorrichtung nach einem der Ansprüche 1 bis 3, **dadurch gekennzeichnet**, daß die Membran (3) im Bereich der Gasaustrittsöffnung (7) gegenüber der übrigen Materialstärke verdickt ist.

5. Vorrichtung nach einem der vorhergehenden Ansprüche, **dadurch gekennzeichnet**, daß der Innenumfangsrand (I) der Membran (3) bzw. der Trägerfläche (2) geringfügig höher liegt als der Außenumfangsrand (A).

6. Vorrichtung nach einem der vorhergehenden Ansprüche, **dadurch gekennzeichnet**, daß die Trägerfläche (2) von außen nach innen allmählich, vorzugsweise konisch ansteigend ausgebildet ist.

7. Vorrichtung nach einem der vorhergehenden Ansprüche, **dadurch gekennzeichnet**, daß die Membran (3) unter Vorspannung auf die Trägerfläche (2) aufgespannt ist.

8. Vorrichtung nach einem der vorhergehenden Ansprüche, **dadurch gekennzeichnet**, daß die Tragerfläche (2) und die Membran (3) an ihrem Außenumfangsrand (A) und/oder in ihrem Innenumfangsrand (7) einen Nut-Feder-Eingriff (9) bilden.

9. Vorrichtung nach einem der vorhergehenden Ansprüche, **dadurch gekennzeichnet**, daß sich die Membran (3) an ihrem Außenumfangsrand (A) und/oder ihrem Innenumfangsrand (I) mit einem Umfangswulst (10, 11) an einen Umfangsflansch (12, 13) der Trägerfläche (2) abstützt.

10. Vorrichtung nach einem der vorhergehenden Ansprüche, **dadurch gekennzeichnet**, daß die Membran (3) an ihrem Außenumfangsrand (A) und/oder ihrem Innenumfangsrand (I) mittels Spannring (14) an der Tragfläche (2) radial festgelegt ist.

11. Vorrichtung nach einem der vorhergehenden Ansprüche, **dadurch gekennzeichnet**, daß die Membran (3) an ihrem Außenumfangsrand (A) und/oder ihrem Innenumfangsrand (I) mittels Deckplatte bzw. -ring (15) an der Trägerfläche (2) axial und/oder radial festgeklemmt ist.

12. Vorrichtung nach einem der vorhergehenden Ansprüche, **dadurch gekennzeichnet**, daß die Membran (3) ohne Gasbeaufschlagung von dem umgebenden flüssigen Medium dicht auf die Trägerfläche (2) gedrückt wird.

13. Vorrichtung nach einem der vorhergehenden Ansprüche, **dadurch gekennzeichnet**, daß die Perforation der Membran (3) ohne Gasbeaufschlagung geschlossen ist.

14. Vorrichtung nach einem der vorhergehenden Ansprüche, **dadurch gekennzeichnet**, daß die Perforationsdichte der Membran (3) von innen nach außen hin zunimmt.

15. Vorrichtung nach einem der vorhergehenden Ansprüche, **dadurch gekennzeichnet**, daß die Membran (3) in ihrer Dicke von innen nach außen hin abnimmt.

16. Vorrichtung nach einem der vorhergehenden Ansprüche, **dadurch gekennzeichnet**, daß die Perforation mittels spitzer Nadeln von der Unterseite (Gasdruckseite) oder von der Oberseite (Gasaustrittsseite) her in die Membran (3) eingebracht ist.

17. Vorrichtung nach einem der vorhergehenden Ansprüche, **dadurch gekennzeichnet**, daß dem Gaszufuhrkanal (5) eine z.B. eine Justierschraube (17) aufweisende Reguliereinrichtung (16) für den Gasdurchtritt zugeordnet ist.

18. Vorrichtung nach einem der vorhergehenden Ansprüche, **dadurch gekennzeichnet**, daß die Trägerkonstruktion (1) mittels Gewinde (18) an einem Gaszufuhrstutzen (19) auf die Gaszufuhrleitung (6) dicht aufschraubbar bzw. durch Klemmbügel (20), Schellenband (21) oder Gewindestab (22) festklemmbar ist.

19. Vorrichtung nach einem der vorhergehenden Ansprüche, **dadurch gekennzeichnet**, daß der Gaszufuhrkanal (5) außermittig zur Trägerfläche (2) bzw. Membran (3) angeordnet ist und in eine ebenfalls außermittig angeordnete Gasaustrittsöffnung (7) der Trägerfläche (2) unter der Membran (3) mündet.

20. Vorrichtung nach einem der vorhergehenden Ansprüche, **dadurch gekennzeichnet**, daß die Trägerfläche (2) wie die Membran (3) aus flexiblem Material besteht, die Shorehärte der Trägerfläche (2) jedoch größer als die Membran (3) ist.

21. Vorrichtung nach einem der vorhergehenden Ansprüche, **dadurch gekennzeichnet**, daß die Membran (3) zunächst auf die Trägerfläche (2) aufgespannt und erst dann von der Gasaustrittsseite aus perforiert worden ist.

## Claims

1. Device for introducing gas into fluids, in particular introducing air into sewage or similar fluid media in gasing reservoirs, with a support structure (1) having a support surface (2) aligning substantially horizontally i.e. parallel to the level for a flat membrane (3) which is fixed in a sealed manner at its outer peripheral edge (A) to the support surface (2), is supported when gas does not act on the support surface (2) and is lifted from the said surface while gas is acting thereon from below, if applicable by opening the perforation located in the membrane, in the region inside the outer peripheral edge (A) to allow gas to exit into the fluid medium, and also with gas feed means (4) forming at least one gas feed channel (5) from a pressure source, e.g. a gas feed pipe (6), by way of a gas outlet port (7) into the gas space (R) between the support surface (2) and the membrane (3) thereon, characterized in that in keeping clear a central flow section (8) the support surface (2) as well as the membrane (3) are constructed so as to be shaped in a ring surface, respectively, and that the membrane (3) is fastened in a sealed manner at its inner peripheral edge (I) bounding the flow cross-section (8) to the support surface (2).

2. Device according to claim 1, characterized in that the gas outlet port (7) of the gas feed channel (5) is in the form of a radial slot (7') in the support surface (2).

3. Device according to claim 1 or 2, characterized in that the membrane (3) has no perforations in the region of the gas outlet port (7) of the support surface (2).

4. Device according to any of claims 1 to 3, charaterized in that the membrane (3) in the area of the gas outlet port (7) is thickened in relation to the remaining material thickness.

5. Device according to any one of the preceding claims, characterized in that the inner peripheral edge (I) of the membrane (3) or the support surface (2) is slightly higher than the outer peripheral edge (A).

6. Device according to any one of the preceding claims, characterized in that the form of the support suface (2) rises gradually from the outside to the inside, preferably in a tapered manner.

7. Device according to any one of the preceding claims, charaterized in that the membrane (3) is spread out on the support surface (2) by pretensioning.

8. Device according to any one of the preceding claims, characterized in that the support surface (2) and the membrane (3) form at their outer peripheral edge (A) and/or at their inner peripheral edge (7) a tongue and groove engagement (9).

9. Device according to any one of the preceding claims, characterized in that the membrane (3) is supported at its outer peripheral edge (A) and/or its inner peripheral edge (I) with a peripheral lip (10, 11) against a peripheral flange (12, 13) of the support surface (2).

10. Device according to any one of the preceding claims, characterized in that the membrance (3) is fixed radially at its outer peripheral edge (A) and/or its inner peripheral edge (I) to the support surface (2) by a clamping ring (14).

11. Device according to any one of the preceding claims, characterized in that the membrance (3) is securedly clamped axially and/or radially at its outer peripheral edge (A) and/or its inner peripheral edge (I) to the support surface (2) by a cover plate or cover ring (15).

12. Device according to any one of the preceding claims, characterized in that the membrane (3) is pressed by the surrounding fluid medium in a sealed manner to the support surface (2) when gas does not act thereon.

13. Device according to any one of the preceding claims, characterized in that the perforation of the membrane (3) is closed when gas does not act thereon.

14. Device according to any one of the preceding claims, characterized in that the perforation density of the membrane (3) increases from the inside to the outside.

15. Device according to any one of the preceding claims, characterized in that the thickness of the membrane (3) decreases from the inside to the outside.

16. Device according to any one of the preceding claims, characterized in that perforation is put into the membrane (3) by sharp needles from the lower side (gas pressure side) or from the upper side (gas outlet side).

17. Device according to any one of the preceding claims, characterized in that regulating means (16) for the passage of gas has e.g. an adjusting screw (17) and is associated with the gas feed channel (5).

18. Device according to any one of the preceding claims, characterized in that the support structure (1) is screwable in a sealed manner by means of a thread (18) on a gas feed nozzle (19) to the gas feed pipe (6) or is clampable securely thereto by a clamping hoop (20), clamp strip (21) or a threaded bar (22).

19. Device according to any of the preceding claims, characterized in that the gas feed channel (5) is arranged eccentrically with respect to the support surface (2) or the membrance (3), and runs into a gas outlet port (7), also arranged eccentrically, of the support surface (2) below the membrane (3).

20. Device according to any one of the preceding claims, characterized in that the support surface (2) consists of flexible material, as does the membrane (3), but the Shore hardness of the suport surface (2) being greater than the membrane (3).

21. Device according to any one of the preceding claims, characterized in that the membrane (3) was initially stretched on the support surface (2) and was subsequently perforated from the gas outlet side.

## Revendications

1. Dispositiv pour introduire du gaz dans des liquides, et en particulier pour aérer des eaux usées ou des milieux liquides similaires dans des bassins d'aération, comprenant une structure porteuse (1) qui présente une surface porteuse (2) pour l'essentiel horizontale, c'est-à-dire devant être orientée parallèlement au niveau, et qui est destinée à une membrane de grande surface (3), cependant que celle-ci est fixée d'une manière étanche à la surface porteuse (2) sur son bord périphérique extérieur (A), qu'elle s'appuie sur la surface porteuse (2) en l'absence d'alimentation en gaz et que, dans la région située à l'intérieur du bord périphérique extrérieur (A), elle se soulève de cette surface lors de l'alimentation en gaz depuis le bas, les perforations qu'elle présente s'ouvrant le cas échéant, afin de permettre au gaz de s'échapper dans le milieu liquide, et comprenant aussi un dispositif a'amenée de gaz (4) qui forme au moins un canal d'amenée du gaz (5) et qui, par l'intermédiaire d'une ouverture de sortie du gaz (7), amène le gaz depuis une source de pression, comme par exemple une conduite d'amenée du gaz (8), jusque dans le volume (R) destiné au gaz entre la surface porteuse (2) et la membrane (3) qui est située au-dessus de celle-ci, caractérisé par le fait que tant la surface porteuse (2) que la membrane (3) sont réalisées chacune en forme de surfaces annulaires en laissant libre une section transversale d'écoulement centrale (8), et par le fait que la membrane (3) est fixée d'une manière étanche à la surface porteuse (2) par son bord périphérique intérieur (I) qui délimite la section transversale d'écoulement (8).

2. Dispositif selon la revendication 1, caractérisé par le fait que l'ouverture de sortie du gaz (7) du canal d'amenée du gaz (5) présente la forme d'une fente radiale (7') ménagée dans la surface porteuse (2).

3. Dispositif selon la revendication 1 ou 2, caractérisé par le fait que la membrane (3) est exemple de perforations dans la région de l'ouverture de sortie du gaz (7) de la surface porteuse (2).

4. Dispotitif selon l'une des revendications 1 à 3, caractérisé par le fait que la matière de la membrane (3) présente dans la région de l'ouverture de sortie du gaz (7) une épaisseur qui est supérieure à celle du reste de sa surface.

5. Dispositif selon l'une des revendications précédentes, caractérisé par le fait que le bord périphérique intérieur (I) de la membrane (3) ou de sa surface porteuse (2), respectivement, est situé à un niveau légèrement supérieur à celui du bord périphérique extérieur (A).

6. Dispositif selon l'une des revendications précédentes, caractérisé par le fait que la surface porteuse (2) monte progressivement, de préférence en cône, de l'extérieur vers l'interieur.

7. Dispositif selon l'une des revendications précédentes, caractérisé par le fait que la membrane (3) est serrée sur la surface porteuse (2) avec une tension préalable.

8. Dispositif selon l'une des revendications précédentes, caractérisé par le fait que la surface porteuse (2) et la membrane (3) forment un assemblage à rainure et languette (9) sur leur bord périphérique extérieur (A) et/ou dans leur bord périphérique intérieur (I).

9. Dispositif selon l'une des revendications précédentes, caractérisé par le fait que, sur son bord périphérique extérieur (A) et/ou sur son bord périphérique intérieur (I), la membrane (3) s'appuie par un bourrelet périphérique (10, 11) sur un rebord périphérique (12, 13) de la surface porteuse (2).

10. Dispositif selon l'une des revendications précédentes, caractérisé par le fait que, sur son bord périphérique extérieur (A) et/ou sur son bord périphérique intérieur (I), la membrane (3) est fixée dans le sens radial à la surface porteuse (2) au moyen d'une couronne de serrage (14).

11. Dispositif selon l'une des revendications précédentes, caractérisé par le fait que, sur son bord périphérique extérieur (A) et/ou sur son bord périphérique intérieur (I), la membrane (3) est serrée dans le sens axial et/ou radial sur la surface porteuse (2) au moyen d'une plaque de recouvrement ou, respectivement, d'une bague de recouvrement (15).

12. Dispositif selon l'une des revendications précédentes, caractérisé par le fait qu'en absence d'alimentation en gaz, la membrane (3) est serrée d'une manière étanche sur la surface porteuse (2) par le milieu liquide qui l'entoue.

13. Dispositif selon l'une des revendications précédentes, caractérisé par le fait que les perforations de la membrane (3) sont fermées en l'absence d'alimentation en gaz.

14. Dispositif selon l'une des revendications précédentes, caractérisé par le fait que la densité des perforations de la membrane (3) augmente de l'intérieur vers l'extérieur.

15. Dispositif selon l'une des revendications précédentes, caractérisé par le fait que l'épaisseur de la membrane (3) décroît de l'intérieur vers l'extérieur.

16. Dispositif selon l'une des revendications précédentes, caractérisé par le fait que les perforations sont ménagées dans la membrane (3) au moyen d'aiguilles pointues depuis le côté inférieur (côté de la pression du gaz) ou depuis le côté supérieur (côté de la sortie du gaz).

17. Dispositif selon l'une des revendications précédentes, caractérisé par le fait qu'au canal d'amenée du gaz (5) est associé un dispositif de régulation (16) qui est destiné au passage du gaz et qui comporte par exemple une vis de réglage.

18. Dispositif selon l'une des revendications précédentes, caractérisé par le fait que la structure porteuse (1) peut être vissée d'une manière étanche sur la conduite d'amenée du gaz (6) au moyen d'un filetage (18) qui est présent sur une tubulure d'amenée du gaz (18) ou, respectivement, qu'elle peut être serrée par un étrier de serrage (20), par un collier de serrage (21) ou par une tige filetée.

19. Dispositif selon l'une des revendications précédentes, caractérisé par le fait que le canal d'amenée du gaz (5) est disposé d'une manière excentrée par rapport à la surface porteuse (2) ou à la membrane (3), respectivement, et qu'il débouche sous la membrane (3) dans une ouverture de sortie du gaz (7) de la surface porteuse (2) qui est également disposée d'une manière excentrée.

20. Dispositif selon l'une des revendications précédentes, caractérisé par le fait que la surface porteuse (2) est constituée par une matière flexible, tout comme la membrane (3), mais que la dureté Shore de la surface porteuse (2) est supérieure à celle de la membrane (3).

21. Dispositif selon l'une des revendications précédentes, caractérisé par le fait que l'on serre tout d'abord la membrane (3) sur la surface porteuse (2), et que c'est seulement alors qu'on la perfore depuis le côté de la sortie du gaz.
